(19) Europäisches Patentamt
European Patent Office
Office européen des brevets

(11) Veröffentlichungsnummer: **0 032 376**
**B1**

(12) # EUROPÄISCHE PATENTSCHRIFT

(45) Veröffentlichungstag der Patentschrift: **20.07.83**

(51) Int. Cl.³: **C 07 F 7/18**, C 08 G 77/06

(21) Anmeldenummer: **81100051.2**

(22) Anmeldetag: **08.01.81**

(54) **Verfahren zur kontinuierlichen Herstellung von SiOC-Gruppen aufweisenden Silanen oder SiOC-Gruppen aufweisenden Polysiloxanen.**

(30) Priorität: **10.01.80 DE 3000782**

(43) Veröffentlichungstag der Anmeldung: **22.07.81 Patentblatt 81/29**

(45) Bekanntmachung des Hinweises auf die Patenterteilung: **20.07.83 Patentblatt 83/29**

(84) Benannte Vertragsstaaten: **BE DE FR GB IT NL**

(56) Entgegenhaltungen:
**DE-A-2 409 731**
**DE-A-2 800 017**
**DE-B-2 061 189**
**US-A-3 651 117**

(73) Patentinhaber: **WACKER-CHEMIE GMBH, Prinzregentenstrasse 22, D-8000 München 22 (DE)**

(72) Erfinder: **Lindner, Tassilo, Dr. Dipl.-Chem., Neuhauserstrasse 10, D-8261 Mehring-Öd (DE)**
Erfinder: **Engelsberger, Georg, Holzgassen 45, A-5122 Ach (AT)**
Erfinder: **Schinabeck, Anton, Moosbrunnerstrasse 16, D-8263 Burghausen (DE)**
Erfinder: **Zeller, Norbert, Dr. Dipl.-Chem., Schweitzerstrasse 5, D-8263 Burghausen (DE)**
Erfinder: **Riedle, Rudolf, Dr. Dipl.-Chem., Lindenweg 29, D-8263 Burghausen (DE)**

**EP 0 032 376 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Verfahren zur kontinuierlichen Herstellung von SiOC-Gruppen aufweisenden Silanen oder SiOC-Gruppen aufweisenden Polysiloxanen

Aus DE-AS Nr. 2061189, ausgelegt 25. April 1974, Anmelder: Wacker-Chemie GmbH, wobei dieser Auslegeschrift US Nr. 3792071, patentiert 12. Februar 1974, S. Nitzsche *et al.*, Wacker-Chemie GmbH, entspricht, ist ein Verfahren zur kontinuierlichen Herstellung von Alkoxysilanen oder Alkoxypolysiloxanen, also von SiOC-Gruppen aufweisenden Silanen oder SiOC-Gruppen aufweisenden Polysiloxanen, durch Umsetzung eines Chlorsilans mit einer aliphatischen Verbindung mit einer alkoholischen Hydroxylgruppe und gegebenenfalls Wasser in einer mit Rückflusskühler versehenen, bei erhöhter Temperatur gehaltenen Kolonne bekannt. Bei diesem bekannten Verfahren wird das Chlorsilan am Kopf der Kolonne, der Alkohol gasförmig von unten oder an einer Stelle zwischen dem unteren Ende und dem oberen Ende des unteren Drittels der Kolonne und gegebenenfalls Wasser an einer beliebigen Stelle der Kolonne eingeführt und das Reaktionsprodukt aus dem unteren Ende bzw. unterhalb der Einführungsstelle des Alkohols aus der Kolonne geführt. Gegenüber diesem bekannten Verfahren hat das erfindungsgemässe Verfahren insbesondere die Vorteile, dass es höhere Raum-Zeit-Ausbeuten ermöglicht, ohne dass dafür ein höherer Gehalt von Chlorwasserstoff im Produkt in Kauf genommen werden muss, und dass unerwünschte Nebenreaktionen, wie die Polymerisation von Silanen mit aliphatischer Mehrfachbindung, in viel stärkerem Ausmass vermieden werden.

Gegenstand der Erfindung ist ein Verfahren zur kontinuierlichen Herstellung von SiOC-Gruppen aufweisenden Silanen oder SiOC-Gruppen aufweisenden Polysiloxanen durch Umsetzung von Si-Verbindung mit Si-gebundenem Chlor mit aliphatischer Verbindung mit einer alkoholischen Hydroxylgruppe und gegebenenfalls Wasser in einer mit Rückflusskühler versehenen, bei erhöhter Temperatur gehaltenen Kolonne, dadurch gekennzeichnet, dass in einer 1. Stufe in einem 1. Reaktor in jeweils flüssiger Form ein Chlorsilan und eine aliphatische Verbindung mit einer alkoholischen Hydroxylgruppe in Mengen von 0,5 bis 0,9 gmol alkoholischer Hydroxylgruppe je Grammatom Si-gebundenen Chlors im Gleichstrom eingeführt und in diesem Reaktor miteinander vermischt werden und das aus dem 1. Reaktor ausgetretene flüssige Reaktionsgemisch in einer 2. Stufe am Kopf einer als 2. Reaktor verwendeten und bei erhöhter Temperatur gehaltenen Kolonne, die aliphatische Verbindung mit einer alkoholischen Hydroxylgruppe in mindestens zur vollständigen Umsetzungen von restlichem Si-gebundenen Chlor in dem bei der 1. Stufe erhaltenen Reaktionsgemisch ausreichender Menge gasförmig am unteren Ende der Kolonne oder an einer Stelle zwischen dem unteren Ende und dem oberen Ende des unteren Drittels der Kolonne sowie gegebenenfalls Wasser an einer beliebigen Stelle der Kolonne eingeführt und das Reaktionsprodukt aus dem unteren Ende bzw. unterhalb der Einführungsstelle von aliphatischer Verbindung mit einer alkoholischen Hydroxylgruppe aus der Kolonne geführt wird.

Aus DE-A Nr. 2409731 ist es bekannt, in einem diskontinuierlichen Verfahren zur Herstellung von SiOC-Gruppen aufweisenden Silanen oder Polysiloxanen die Umsetzung der Chlorsilane mit den Alkoholen in zwei Stufen durchzuführen, um den Chlorwasserstoffgehalt des Produktes zu vermindern.

Wie der Vergleich der in den Beispielen von DE-B Nr. 2061819 angegebenen Produktausbeuten und -eigenschaften mit den in den Beispielen von DE-A Nr. 2409731 angegebenen Produktausbeuten und -eigenschaften und der Chlorwasserstoffgehalte der Produkte gemäss DE-B Nr. 2061819, Spalte 2, Zeile 7 mit der Angabe in DE-A Nr. 2409731 höchst eindrucksvoll zeigt, konnte DE-A Nr. 2409731 jedoch keinen Anlass bieten, das Verfahren nach DE-B Nr. 2061819 zu verbessern und folglich das erfindungsgemässe Verfahren auch nicht nahelegen.

Als Chlorsilane können auch im Rahmen des erfindungsgemässen Verfahrens alle Chlorsilane eingesetzt werden, die bisher zur Herstellung von SiOC-Gruppen aufweisenden Silanen bzw. SiOC-Gruppen aufweisenden Siloxanen durch Umsetzung eines Chlorsilans mit einer aliphatischen Verbindung mit einer alkoholischen Hydroxylgruppe und gegebenenfalls Wasser eingesetzt werden konnten. Es sind dies insbesondere Verbindungen der allgemeinen Formel

$$R_n\,SiCl_{4-n}$$

worin R gleiche oder verschiedene Atome oder organische Reste bedeutet, die gegenüber der jeweils eingesetzten aliphatischen Verbindung mit einer alkoholischen Hydroxylgruppe unter den jeweiligen Reaktionsbedingungen inert sind, und n 0, 1, 2 oder 3 ist.

Beispiele für R sind Wasserstoff und Kohlenwasserstoffreste, wie Methyl-, Vinyl-, Phenyl- und Tolylreste; ferner durch unter den jeweiligen Reaktionsbedingungen gegenüber jeweils eingesetzter Verbindung mit einer alkoholischen Hydroxylgruppe inerte Atome oder Gruppen substituierte Kohlenwasserstoffreste, bei denen die Kohlenstoffatome, an die Halogen gebunden ist, in α-Stellung oder mindestens in γ-Stellung zum Si-Atom stehen, z.B. der γ-Chlorpropylrest; und Halogenarylreste, z.B. Chlorphenylreste. Weitere Beispiele für geeignete substituierte Kohlenwasserstoffreste sind der β-Cyanäthylrest und der γ-Acryloxypropylrest sowie der γ-Methacryloxypropylrest.

Es können Gemische verschiedener Chlorsilane verwendet werden. Dies kann insbesondere dann von Vorteil sein, wenn Wasser beim erfindungsgemässen Verfahren mitverwendet wird.

Wenn bei dem erfindungsgemässen Verfahren Wasser mitverwendet wird, kann es zweckmässig sein, das Chlorsilan mit einem inerten Lösungsmit-

tel, dessen Siedepunkt höher ist als die Temperatur, bei der die Kolonne der 2. Stufe betrieben wird, zu verdünnen, damit die Viskosität des entstandenen SiOC-Gruppen aufweisenden Polysiloxans die Entfernung dieses Produkts aus der Kolonne nicht behindert.

Als aliphatische Verbindungen mit einer alkoholischen Hydroxylgruppe können ebenfalls auch im Rahmen des erfindungsgemässen Verfahrens alle aliphatischen Verbindungen mit einer alkoholischen Hydroxylgruppe eingesetzt werden, die bisher zur Herstellung von SiOC-Gruppen aufweisenden Silanen bzw. SiOC-Gruppen aufweisenden Siloxanen durch Umsetzung von Chlorsilan mit aliphatischer Verbindungen mit alkoholischer Hydroxylgruppe und gegebenenfalls Wasser eingesetzt werden konnten und deren Siedepunkt unter dem des jeweils herzustellenden SiOC-Gruppen aufweisenden Silans oder Polysiloxans liegt und die unter dem jeweiligen Druck in der Kolonne sieden. Bevorzugt sind Alkanole und durch ein Äthersauerstoffatom substituierte Alkanole mit jeweils 1 bis 6 Kohlenstoffatomen, wie Methanol, Äthanol, β-Methoxyäthanol, n-Propanol und n-Hexanol.

Vorzugsweise wird die aliphatische Verbindung mit einer alkoholischen Hydroxylgruppe in Mengen von 0,7 bis 0,9 gmol alkoholischer Hydroxylgruppe je Grammatomen Si-gebundenen Chlors bei der 1. Stufe eingesetzt.

Der 1. Reaktor kann z.B. aus einem Rührkessel oder einem Rohrreaktor, der beispielsweise ringförmig gebogen oder U-förmig und/oder gewendelt sein kann, bestehen. Auch wenn es sich bei dem 1. Reaktor um einen Rohrreaktor handelt, so wird allein durch den bei der Umsetzung der in diesen Reaktor erfindungsgemäss eingeführten Reaktionsteilnehmer gebildeten Chlorwasserstoff eine gute Vermischung dieser Reaktionsteilnehmer miteinander und ein Produktkreislauf in einem solchen Rohrreaktor bewirkt. Falls erwünscht, kann jedoch der Inhalt des 1. Reaktors auch durch Anwendung einer Umwälzpumpe in Umlauf geführt werden. Dabei können z.B. Geschwindigkeiten von 10 bis 7000 cm und mehr je Minute angewendet werden. Ein solches zusätzliches Umwälzen ist jedoch keineswegs unbedingt erforderlich und wird auch vorzugsweise nicht angewandt.

Der Chlorwasserstoff wird an einer geeigneten Stelle aus dem 1. Reaktor geführt oder dem aus dem 1. Reaktor geführten Reaktionsgemisch vor dem Eintritt in den 2. Reaktor an einer Stelle der Leitung zwischen dem 1. und dem 2. Reaktor entnommen.

Die Temperatur im 1. Reaktor und damit auch die Temperatur, bei der das aus dem 1. Reaktor ausgetretene flüssige Reaktionsgemisch am Kopf der als 2. Reaktor verwendeten Kolonne eingeführt wird, beträgt vorzugsweise 0 bis 20°C. Die Verweilzeit des Reaktionsgemisches im 1. Reaktor beträgt vorzugsweise 5 bis 15 min.

Als Kolonne kann bei der 2. Stufe des erfindungsgemässen Verfahrens jedes, meist mit Füllungen oder Einbauten versehene Rohr verwendet werden, das auch bei der fraktionierten Destillation zum Fraktionieren eingesetzt werden kann, beispielsweise eine Füllkörperkolonne. Vorzugsweise ist die Kolonne mindestens 90 cm lang. Die obere Grenze der Kolonnenlänge ist lediglich eine Frage der Wirtschaftlichkeit. Die bei der 2. Stufe des erfindungsgemässen Verfahrens eingesetzte Kolonne kann mit einem Rückflusskühler ausgestattet sein.

Die Menge an aliphatischer Verbindung mit einer alkoholischen Hydroxylgruppe, die in die als 2. Reaktor verwendete Kolonne eingeführt wird, kann genau so gross sein, wie die Menge an aliphatischer Verbindung mit einer alkoholischen Hydroxylgruppe, die dem Inhalt der Kolonne durch vollständige Umsetzung mit restlichem Si-gebundenen Chlor in dem bei der 1. Stufe erhaltenen Reaktionsgemisch entzogen wird. Es kann aber auch überschüssige aliphatische Verbindung mit einer alkoholischen Hydroxylgruppe am Rückflusskühler sieden und/oder durch Entnahme, gegebenenfalls zusammen mit unerwünschten Nebenprodukten, am Rückflusskühler dem Kolonneninhalt entzogen werden, wenn überschüssige aliphatische Verbindung mit alkoholischer Hydroxylgruppe in die als 2. Reaktor verwendete Kolonne eingeführt wird.

Wenn bei dem erfindungsgemässen Verfahren Wasser mitverwendet wird, wird es vorzugsweise ebenfalls in Gasform in die Kolonne eingeführt. Das Wasser kann im Gemisch mit in die Kolonne eingeführter aliphatischer Verbindung mit einer alkoholischen Hydroxylgruppe oder getrennt davon die Kolonne eingeführt werden. Wird es getrennt von der aliphatischen Verbindung mit einer alkoholischen Hydroxylgruppe in die Kolonne eingeführt, so kann es an jeder beliebigen Stelle, die anders ist als diejenigen der Einführungsstellen der anderen Stoffe, die in die Kolonne eingeführt werden, in die Kolonne eingeführt werden.

Der Ausdruck in Gasform oder gasförmig in bezug auf die aliphatische Verbindung mit einer alkoholischen Hydroxylgruppe und/oder auf Wasser bei der 2. Stufe des erfindungsgemässen Verfahrens soll bedeuten, dass die aliphatische Verbindung mit einer alkoholischen Hydroxylgruppe bzw. das Wasser bei der Temperatur, bei der sie bei dem in der Kolonne herrschenden Druck sieden, oder oberhalb dieser Temperatur und in verdampftem Zustand in die Kolonne eingeführt werden.

Die Temperatur in der als 2. Reaktor verwendeten Kolonne liegt etwa 100 cm unterhalb der Stelle, wo das Reaktionsgemisch aus dem 1. Reaktor in die Kolonne eintritt, mindestens ½°C oberhalb des Siedepunkts des jeweils verwendeten Alkohols bei dem jeweils in der Kolonne herrschenden Druck.

Zweckmässigerweise sind die Drücke im 1. und im 2. Reaktor gleich. Das erfindungsgemässe Verfahren wird vorzugsweise beim Druck der umgebenden Atmosphäre, also bei 1 bar oder etwa 1 bar, durchgeführt, weil beim Arbeiten unter dem Druck der umgebenden Atmosphäre der Aufwand z.B. für korrosionsfeste Pumpen entfällt. Es kann jedoch, falls es die Lage der Siedepunkte der Reaktionsteilnehmer erfordert oder zweckmässig macht, auch bei höheren oder niedrigeren Drücken gearbeitet werden.

*Beispiel 1*

In das eine Ende eines ringförmig gebogenen Glasrohrs mit einer Länge von 1250 mm und einer lichten Weite von 100 mm als 1. Reaktor werden 310 mol je Stunde Vinyltrichlorsilan und 810 mol je Stunde Äthanol im Gleichstrom eingeführt. Die Temperatur des Inhalts des Rohrs beträgt 15°C. Das aus dem anderen Ende des ringförmig gebogenen Glasrohrs ausgetretene flüssige Reaktionsgemisch wird, nachdem aus ihm kurz nach dem Austreten aus dem Glasrohr an einer Stelle der Leitung zu der als 2. Reaktor verwendeten Kolonne der Chlorwasserstoff entweichen gelassen wurde, am Kopf dieser Kolonne eingeführt. Diese Kolonne hat eine Länge von 12000 mm und eine lichte Weite von 200 mm. Sie ist bis zu einer Länge von 10000 mm mit Porzellansattelkörper (12 ×12 mm) gefüllt.

9000 mm unterhalb der Stelle, wo das Reaktionsgemisch aus dem 1. Reaktor in die Kolonne eintritt, werden in die Kolonne 120 mol Äthanol je Stunde in Gasform eingeführt. 100 mm unterhalb der Stelle, wo das Reaktionsgemisch aus dem 1. Reaktor in die Kolonne eintritt, beträgt die Temperatur des Inhalts der Kolonne 80°C. Das aus dem unteren Ende der Kolonne ausfliessende Gut läuft über einen Siphon und einen Produktkühler in die Vorlage. Es werden kontinuierlich fast 310 mol je Stunde Vinyltriäthoxysilan mit einer gaschromatographisch bestimmten Reinheit von 99,7% und einem Chlorwasserstoffgehalt von weniger als 5 ppm (Gewichtsteile je Million Gewichtsteile) erhalten.

*Vergleichsversuch A*

Die in Beispiel 1 beschriebene Arbeitsweise wird wiederholt mit der Abänderung, dass Vinyltrichlorsilan und Äthanol ohne vorheriges Reagieren miteinander in einem 1. Reaktor in die Kolonne eingeführt werden. Es können höchstens 150 mol je Stunde Vinyltriäthoxysilan erhalten werden, ohne dass der Chlorwasserstoffgehalt dieses Silans auf über 5 ppm steigt.

*Beispiel 2*

Die in Beispiel 1 beschriebene Arbeitsweise wird wiederholt mit den Abänderungen, dass anstelle von Vinyltrichlorsilan und Äthanol 190 mol je Stunde γ-Methacryloxypropyltrichlorsilan und 480 mol je Stunde Methanol in den 1. Reaktor eingeführt werden und in die Kolonne 90 mol je Stunde Methanol in Gasform eingeführt werden. Die Temperatur des Inhalts des 1. Reaktors beträgt 5°C. 1000 mm unterhalb der Stelle, wo das Reaktionsgemisch aus dem 1. Reaktor in die Kolonne eintritt, beträgt die Temperatur des Inhalts der Kolonne 66°C.

Es werden fast 190 mol γ-Methacryloxypropyltrimethoxysilan mit einer gaschromatographisch bestimmten Reinheit von 99,2% und einem Chlorwasserstoffgehalt von weniger als 5 ppm erhalten.

Das Verfahren kann auch ohne Mitverwendung eines Polymerisationsinhibitors über 2 Wochen ununterbrochen durchgeführt werden.

*Vergleichsversuch B*

Am Kopf der in Beispiel 1 beschriebenen Kolonne werden 60 mol je Stunde γ-Methacryloxypropyltrichlorsilan und 900 mm darunter 180 mol je Stunde Methanol in Gasform in die Kolonne eingeführt. Bereits nach 8 h muss das Verfahren abgebrochen werden, weil die Kolonne mit Polymer verstopft ist.

*Beispiel 3*

Die in Beispiel 1 beschriebene Arbeitsweise wird wiederholt mit der Abänderung, dass anstelle von Vinyltrichlorsilan einmal 310 mol je Stunde Methyltrichlorsilan, einmal 310 mol je Stunde Dimethyldichlorsilan und einmal 310 mol je Stunde Phenyltrichlorsilan verwendet werden. Beim Einsatz von Dimethyldichlorsilan werden ausserdem 540 mol je Stunde Äthanol statt der 810 mol je Stunde Äthanol in den 1. Reaktor und 80 mol je Stunde Äthanol statt der 120 mol je Stunde Äthanol in Gasform in die Kolonne eingeführt. Es werden je Stunde fast 310 mol Methyltriäthoxysilan bzw. 310 mol Dimethyldiäthoxysilan bzw. 310 mol Phenyltriäthoxysilan jeweils in einer Reinheit von über 99% und einem Chlorwasserstoffgehalt von weniger als 5 ppm erhalten.

**Patentanspruch**

Verfahren zur kontinuierlichen Herstellung von SiOC-Gruppen aufweisenden Silanen oder SiOC-Gruppen aufweisenden Polysiloxanen durch Umsetzung einer Siliciumvervindung mit Si-gebundem Chlor mit einer aliphatischen Verbindung mit einer alkoholischen Hydroxylgruppe und gegebenenfalls Wasser in einer gegebenenfalls mit Rückflusskühler versehenen, bei erhöhter Temperatur gehaltenen Kolonne, dadurch gekennzeichnet, dass in einer 1. Stufe in einen 1. Reaktor in jeweils flüssiger Form ein Chlorsilan, das mit einem inerten Lösungsmittel, dessen Siedepunkt höher ist als die Temperatur, bei der die Kolonne der 2. Stufe betrieben wird, verdünnt sein kann, wenn in der 2. Stufe Wasser mitverwendet wird, und eine aliphatische Verbindung mit einer alkoholischen Hydroxylgruppe in Mengen von 0,5 bis 0,9 gmol alkoholischer Hydroxylgruppen je Grammatom Si-gebundenen Chlors im Gleichstrom eingeführt und in diesem Reaktor miteinander vermischt werden und das aus dem 1. Reaktor ausgetretene flüssige Reaktionsgemisch in einer 2. Stufe am Kopf einer als 2. Reaktor verwendeten und bei erhöhter Temperatur gehaltenen Kolonne, die aliphatische Verbindung mit einer alkoholischen Hydroxylgruppe in mindestens zur vollständigen Umsetzung von restlichem Si-gebundenem Chlor in dem bei der 1. Stufe erhaltenen Reaktionsgemisch ausreichender Menge gasförmig am unteren Ende der Kolonne oder an einer Stelle zwischen dem unteren Ende und dem oberen Ende des unteren Drittels der Kolonne sowie gegebenenfalls Wasser an einer beliebigen Stelle der Kolonne eingeführt und das Reaktionsprodukt aus dem unteren Ende bzw. unterhalb der Einführungsstelle der aliphatischen Verbindung mit einer alkoholischen Hydroxylgruppe aus der Kolonne geführt wird, wobei etwa 100 cm unterhalb der Stelle, wo das Reaktionsgemisch aus dem 1. Reaktor in die Kolonne eintritt, die Temperatur mindestens ½° C oberhalb des Siedepunkts des jeweils verwendeten Alkohols bei dem jeweils in der Kolonne herrschenden Druck gehalten wird.

## Claim

Process for the continuous manufacture of silanes containing SiOC groups or polysiloxanes containing SiOC groups by reacting a silicon compound containing Si-bonded chlorine with an aliphatic compound containing an alcoholic hydroxy group and, if desired, with water, in a column maintained at elevated temperature and optionally provided with a reflux condenser, characterized in that, in a first stage, a chlorosilane which, if water is co-used in the second stage, may be diluted with an inert solvent having a boiling point greater than the temperature at which the column of the second stage is operated, and an aliphatic compound containing an alcoholic hydroxy group, in amounts of from 0.5 to 0.9 gmol of alcoholic hydroxy groups per gram atom of Si-bonded chlorine, are introduced, in each case in liquid form, in parallel flow into a first reactor and thoroughly mixed with each other in that reactor and, in a second stage, the liquid reaction mixture issuing from the first reactor is introduced at the head of a column maintained at elevated temperature and used as a second reactor; the aliphatic compound containing an alcoholic hydroxy groupe, in an amount that is at least sufficient for the complete reaction of residual Si-bonded chlorine in the reaction mixture obtained during the first stage, is introduced in the from of a gas at the lower end of the column or at a place between the lower end and the upper end of the lower one-third of the column and, if desired, water is introduced at any desired place in the column and the reaction product is conveyed out of the column from the lower end thereof or from below the place of introduction of the aliphatic compound containing an alcoholic hydroxy group, respectively, wherein, approximately 100 cm below the place where the reaction mixture from the first reactor enters the column, the temperature is maintained at not less than 0,5°C above the boiling point of the alcohol used in each case at the pressure prevailing in the column in each case.

## Revendication

Procédé pour la production continue de silanes contenant des groupes SiOC ou de polysiloxanes contenant des groupes SiOC, en faisant réagir un composé du silicium contenant du chlore lié au Si sur un composé aliphatique contenant un groupe hydroxyle alcoolique et éventuellement de l'eau, dans une colonne garnie éventuellement d'un réfrigérant à reflux et maintenue à température élevée, caractérisé en ce que l'on introduit à co-courant, dans une première étape, dans un premier réacteur, l'un et l'autre sous forme liquide, un chlorosilane qui, quand on utilise aussi de l'eau dans la deuxième étape, peut être dilué avec un solvant inerte dont le point d'ébullition est supérieur à la température à laquelle est exploitée la colonne de la deuxième étape, et un composé aliphatique contenant un groupe hydroxyle alcoolique, à raison de 0,5 à 0,9 mol de groupes hydroxyle alcooliques par mole de chlore lié au Si, et qu'on les mélange l'un à l'autre dans ce réacteur, et que l'on introduit le mélange réactionnel liquide sortant du premier réacteur dans une deuxième étape en tête d'une colonne utilisée comme deuxième réacteur et maintenue à température élevée, que l'on introduit sous forme gazeuse, à l'extrémité inférieure de la colonne ou en un point situé entre l'extrémité inférieure et l'extrémité supérieure du tiers inférieur de la colonne, en une quantité au moins suffisante pour la réaction complète du chlore lié au Si dans le mélange réactionnel obtenu dans la première étape, le composé aliphatique contenant un groupe hydroxyle alcoolique, et que l'on introduit aussi, éventuellement, de l'eau en un point quelconque de la colonne, et que l'on extrait de la colonne le produit de réaction, par l'extrémité inférieure ou au-dessous du point d'introduction du composé aliphatique contenant un groupe hydroxyle alcoolique, la température, approximativement 100 cm au-dessous du point où le mélange réactionnel sortant du premier réacteur est introduit dans la colonne, étant d'au moins ½° C supérieure au point d'ébullition de l'alcool utilisé, à la pression régnant dans la colonne.